# EUROPEAN PATENT SPECIFICATION

(11) **EP 1 622 336 B1**
(45) Date of publication and mention of the grant of the patent: **06.02.2008**
(21) Application number: 05104946.8
(22) Date of filing: 07.06.2005
(51) Int. Cl.: H04L 29/06, G06F 17/30, G06F 12/12, G06F 12/08

(54) **Controlling a transmission cache in a networked file system**
Steuerung eines Übertragungscachespeichers in einem Netzwerkdateisystem
Contrôler un cache de transmission dans un système de fichiers en réseau

(30) Priority: 29.07.2004 GB 0416852
(43) Date of publication of application: 01.02.2006
(73) Proprietor: International Business Machines Corporation, Armonk, NY 10504 (US)
(72) Inventor: Barr, Arthur James, IBM United Kingdom Limited, Winchester, Hampshire SO21 2JN (GB); Kettley, Paul, IBM United Kingdom Limited, Winchester, Hampshire SO21 2JN (GB); McAllister, Craig, IBM United Kingdom Limited, Winchester, Hampshire SO21 2JN (GB); Stone, Christopher David, IBM United Kingdom Ltd., Winchester, Hampshire SO21 2JN (GB)
(74) Representative: Burt, Roger James

(56) References cited:
- EP-A- 0 706 135
- US-A- 5 893 920
- US-A1- 2003 051 101

## Description

### Technical field

The present invention relates to controlling a networked file system, and more particularly to controlling a transmission cache in a networked file system.

### Background art

An example of a networked file systems is Sun Microsystems Inc.'s Network File System (NFS). As is known to those of ordinary skill in the art, NFS implementations may have shortcomings in their balancing of data integrity with performance, especially evident in the performance of NFS client machines when sending large quantities of sequential data, for example when sending a 1 GB or larger file to an NFS server. Most NFS clients use some form of caching or transmission buffering provided by the operating system. This is used to store the outgoing data so that in the event that any of the data blocks does not reach the NFS server, it can be resent by the NFS client layer.

When large quantities of data are sent by the NFS client, this NFS client cache can easily become full. To be able to free up this cache a file sync command is sent to the NFS server and only when the successful reply to this file sync is returned, indicating that all data is received OK into stable storage will the NFS client cache be freed up ready for more outgoing write data.

When the NFS server receives the 'file sync' command, most file systems used with NFS Servers ensure that all the file sync data is written to disk. This is required for data reliability. If any of the file sync data has not already been written to disk, this has to be done on receipt of the file sync command and this takes an appreciable time, during which the application write activity in the NFS client is effectively blocked, the flow of data is interrupted and, for the time taken to "harden" the data to stable storage, the writing application on the NFS client is forced to wait.

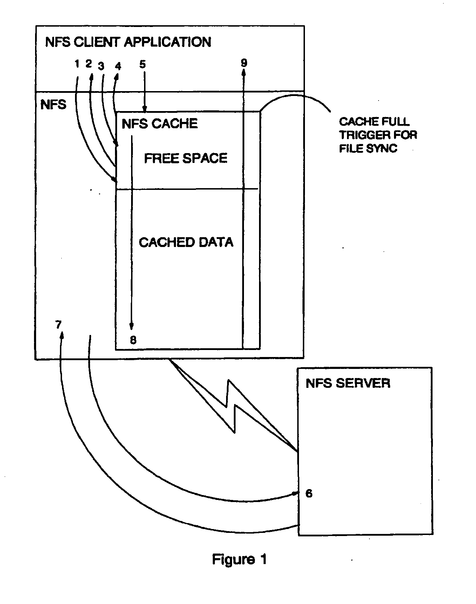

Turning to Figure 1, the following are the basic operations that the NFS according to the prior art performs (each operation in the list being indicated by the corresponding numbered flow arrow in the figure):

1. Application on the NFS client asynchronously writes 1 block (A) of data and this request is sent to the NFS client.

2. Block **A** is successfully saved in client NFS cache and control is returned to the Application so that it can send the next Block.

3. Application on the NFS client asynchronously writes **N** more blocks of data and each is successfully saved in client NFS cache and control returned to the Application. This data is typically also sent to the NFS Server asynchronously, for performance reasons.

4. **N +1** Blocks of data are now saved in client NFS cache and this fills the available clients NFS cache memory.

5. Application on the NFS client now sends a further block of data (block **Z**) which is sent to the NFS client. As the NFS client cache memory is full this block **Z** cannot be saved into the clients NFS cache and therefore control is NOT yet returned to the Application.

6. In order to free up some NFS client cache space a file sync command is now sent from the client to the NFS server to force the data to disk.

7. The server now ensures that all the data has been written to disk before returning the file sync OK reply.

8. The NFS client receives the OK back from the NFS server and is now able to free up the client NFS cache as it now knows that the data has been written and there is no danger of having to re-send the stored blocks of data.

9. The block Z of data sent from the application in step 5 can now be accepted into the client NFS cache and control returned to the Application.

10. The block **Z** of data can now be sent to the NFS server.

A problem occurs between steps 5 and 9 when the application cannot send any more data until the OK reply to the file sync command is returned to the client from the Server. This may take some time as although most of the data has already reached the server and may have already been written to disk, the most recent data will almost certainly be held in some Server side file system memory cache.

The time taken to get the reply back from the file sync command effectively blocks the flow of data from the application and causes a major reduction in performance.

Published European patent application EP 0706135A1 discloses various methods for optimising caching for different sized files, including the use of cache quotas and of dedicated portions of the cache space for portions of large files.

### Disclosure of the invention

In a first aspect, the present invention comprises an apparatus as claimed in claim 1.

Preferably, the unitary sequential data object is a binary large data object (BLOB).

Preferably, the unitary sequential data object comprises image data.

Preferably, the networking file system comprises an NFS.

Preferably, the point intermediate between a transmission cache empty state and a transmission cache full state is a midpoint of said available transmission cache.

Preferably, the point intermediate between a transmission cache empty state and a transmission cache full state is tuneable to utilize a maximum available bandwidth by reassigning available memory.

In a second aspect, there is provided a method as claimed in claim 5.

Preferably, the unitary sequential data object is a binary large data object (BLOB).

Preferably, the unitary sequential data object comprises image data.

Preferably, the networking file system comprises an NFS.

Preferably, the point intermediate between a transmission cache empty state and a transmission cache full state is a midpoint of said available transmission cache.

Preferably, the point intermediate between a transmission cache empty state and a transmission cache full state is tuneable to utilize a maximum available bandwidth by reassigning available memory.

In a third aspect, there is provided a computer program comprising computer program code to, when loaded into a computer system and executed thereon, cause said computer system to perform the steps of a method according to the second aspect.

A preferred embodiment of the present invention is to split the memory cache that is used on the NFS client into two parts. When each part is full this will trigger the sending of a file sync command for only that part of the data held, but there is no need to block the sending of more data, as there is still space in the second half of the NFS client cache that can be used to allow the application to continue sending data. As long as both halves of the NFS client cache are big enough, by the time the file sync reply from the first half is returned, the second half of the NFS client cache is still NOT completely filled with data blocks being sent out by the Application and so there is no effective reduction in performance. As soon as the file sync OK reply is received for the first part of the NFS client cache back from the NFS server the first part of the client NFS cache can be cleared so that this is ready to be used to allow the application to continue sending data once the second part of the NFS client cache has been filled.

The process of the preferred embodiments can be used to considerably enhance the performance of data transfer when writing large unitary sequential data objects from an NFS client to an NFS server as there will be no need to block the application from sending data.

Large unitary sequential data objects may include, for example, binary large data objects (BLOBs). Such large unitary sequential data objects may contain data representing, for example, images, such as high-resolution medical images and the like. Other forms of large unitary sequential data objects may include sound files, multimedia files and the like.

Embodiments of the present invention can also be preferably further improved by adding autonomic self tuning of the amount of NFS client cache memory required to just avoid the file sync wait time. This would minimise the amount of memory used for a particular pattern of I/O from the application on the client.

### Brief description of the drawings

A preferred embodiment of the present invention will now be described, by way of example only, with reference to the accompanying drawing figures, in which:

Figure 1 shows the operation of an NFS client and server according to the known prior art, as described above;

Figure 2 shows in schematic form one type of apparatus in which the present invention may be embodied; and

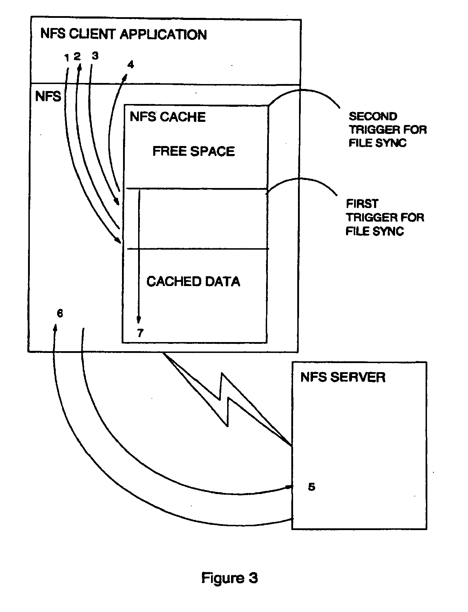

Figure 3 shows the operation of an NFS client and server according to a preferred embodiment of the present invention.

### Best mode for carrying out the invention

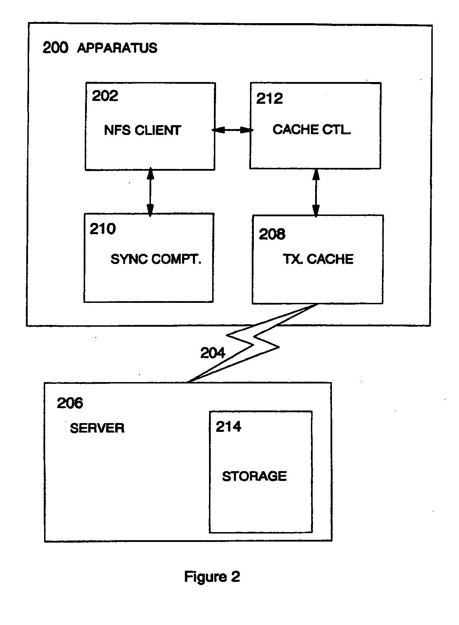

Turning to Figure 2, there is shown a schematic diagram of an apparatus 200 for operating a networked file system client 202 to control transmission over an untrusted network 204 to a server 206 of a unitary sequential data object larger than an available transmission cache 208, and comprising a synchronization component 210 operable to issue a file synchronization command at a point intermediate between a transmission cache empty state and a transmission cache full state; and a cache control component 212 operable to reclaim a partial cache space in said transmission cache 208 for reuse after issuance of said file synchronization command.

An improved operation flow is now enabled, as is shown in Figure 2, as follows:

1. Application on the NFS client asynchronously writes 1 block (A) of data and this request is sent to the NFS client.

2. Block **A** is successfully saved in client NFS cache and control is returned to the Application so that it can send the next Block.

3. Application on the NFS client asynchronously writes **N** more blocks of data and each is successfully saved in client NFS cache and control returned to the Application. This data is typically also sent to the NFS Server asynchronously, for performance reasons.

4. **N +1** Blocks of data are now saved in client NFS cache and this fills the available clients NFS cache memory to the first file sync trigger point.

5. In order to free up some NFS client cache space the file sync command is now sent from the client to the NFS server to force the data from the first part of the cache to disk.

6. The server now ensures that all the data has been written to disk before returning the file sync OK reply.

7. The NFS client receives the OK back from the NFS server and is now able to free up the first part client NFS cache as it now knows that the data has been written and there is no danger of having to re-send the stored blocks of data.

During steps 5, 6 and 7, the application still has the remaining part of the cache to write into, and so is not blocked waiting for the file sync OK response from the server to confirm that the first part of the data has been hardened to disk.

It will be clear to one skilled in the art that the method of the present invention may suitably be embodied in a logic apparatus comprising logic means to perform the steps of the method, and that such logic means may comprise hardware components or firmware components.

It will be appreciated that the method described above may also suitably be carried out fully or partially in software running on one or more processors (not shown), and that the software may be provided as a computer program element carried on any suitable data carrier (also not shown) such as a magnetic or optical computer disc. The channels for the transmission of data likewise may include storage media of all descriptions as well as signal carrying media, such as wired or wireless signal media.

The present invention may suitably be embodied as a computer program product for use with a computer system. Such an implementation may comprise a series of computer readable instructions either fixed on a tangible medium, such as a computer readable medium, for example, diskette, CD-ROM, ROM, or hard disk, or transmittable to a computer system, via a modem or other interface device, over either a tangible medium, including but not limited to optical or analogue communications lines, or intangibly using wireless techniques, including but not limited to microwave, infrared or other transmission techniques. The series of computer readable instructions embodies all or part of the functionality previously described herein.

Those skilled in the art will appreciate that such computer readable instructions can be written in a number of programming languages for use with many computer architectures or operating systems. Further, such instructions may be stored using any memory technology, present or future, including but not limited to, semiconductor, magnetic, or optical, or transmitted using any communications technology, present or future, including but not limited to optical, infrared, or microwave. It is contemplated that such a computer program product may be distributed as a removable medium with accompanying printed or electronic documentation, for example, shrink-wrapped software, pre-loaded with a computer system, for example, on a system ROM or fixed disk, or distributed from a server or electronic bulletin board over a network, for example, the Internet or World Wide Web.

It will be further appreciated that embodiments of the present invention may be provided in the form of a service deployed on behalf of a customer to offer offsite disaster recovery services.

It will also be appreciated that various further modifications to the preferred embodiment described above will be apparent to a person of ordinary skill in the art.

## Claims

1. An apparatus for operating a networked file system client (202) to control transmission over a network of a unitary sequential data object that is larger than an available transmission cache (208), the apparatus **characterised in** comprising: a synchronization component (210) operable to issue a file synchronization command from the client (202) to a networked file system server (206) at a point intermediate between a transmission cache empty state and a transmission cache full state; and a cache control component (212) operable on receipt of a positive response from said networked file system server (206) to reclaim a cache space in said transmission cache (208) for reuse after issuance of said file synchronization command.

2. The apparatus as claimed in claim 1, wherein said unitary sequential data object is a binary large data object (BLOB).

3. The apparatus as claimed in claim 1 or claim 2, wherein said point intermediate between a transmission cache empty state and a transmission cache full state is a midpoint of said available transmission cache.

4. The apparatus as claimed in any of claims 1 to 3, wherein said point intermediate between a transmission cache empty state and a transmission cache full state is tuneable to utilize a maximum available bandwidth by reassigning available memory.

5. A method for operating a networked file system client (202) to control transmission over a network of a unitary sequential data object that is larger than an available transmission cache, the method **characterised in** comprising steps of: issuing, by a synchronization component (210), a file synchronization command from the client (202) to a networked file system server (206) at a point intermediate between a transmission cache empty state and a transmission cache full state; and reclaiming, by a cache control component (212) on receipt of a positive response from said networked file system server (206), a cache space in said transmission cache (208) for reuse after issuance of said file synchronization command.

6. The method as claimed in claim 5, wherein said unitary sequential data object is a binary large data object (BLOB).

7. The method as claimed in claim 5 or claim 6, wherein said point intermediate between a transmission cache empty state and a transmission cache full state is a midpoint of said available transmission cache.

8. The method as claimed in any of claims 5 to 7, wherein said point intermediate between a transmission cache empty state and a transmission cache full state is tuneable to utilize a maximum available bandwidth by reassigning available memory.

9. A computer program comprising computer program code to, when loaded into a computer system and executed thereon, cause said computer system to perform the steps of a method as claimed in any of claims 5 to 8.

## Patentansprüche

1. Vorrichtung zum Betreiben eines Client (202) eines Netzwerkdateisystems, um die Übertragung eines Einheitsobjekts aus sequenziellen Daten, das größer als der verfügbare Speicherplatz eines Übertragungs-Cachespeichers (208) ist, über ein Netzwerk zu steuern, wobei die Vorrichtung **dadurch gekennzeichnet ist, dass** sie Folgendes umfasst: eine Synchronisationskomponente (210), die zur Ausgabe eines Dateisynchronisationsbefehls von dem Client (202) an einen Netzwerkdateisystem-Server (206) an einem Punkt dient, der zwischen einem Zustand "leer" eines Übertragungs-Cachespeichers und einem Zustand "voll" eines Übertragungs-Cachespeichers liegt; und eine Cachespeicher-Steuerungskomponente (212), die nach dem Empfang einer positiven Antwort von dem Netzwerkdateisystem-Server (206) dazu dient, wieder Speicherplatz in dem Übertragungs-Cachespeicher (208) zur Wiederverwendung nach der Ausgabe des Dateisynchronisationsbefehls freizugeben.

2. Vorrichtung nach Anspruch 1, wobei das Einheitsobjekt mit den sequenziellen Daten ein binäres großes Datenobjekt (BLOB) ist.

3. Vorrichtung nach Anspruch 1 oder Anspruch 2, wobei der zwischen dem zustand "leer" eines Übertragungs-Cachespeichers und dem Zustand "voll" eines Übertragungs-Cachespeichers liegende Punkt ein Mittelpunkt des verfügbaren Speicherplatzes des Übertragungs-Cachespeichers ist.

4. Vorrichtung nach einem der Ansprüche 1 bis 3, wobei der zwischen dem Zustand "leer" eines Übertragungs-Cachespeichers und dem Zustand "voll" eines Übertragungs-Cachespeichers liegende Punkt eingestellt werden kann, um die maximal verfügbare Bandbreite in Anspruch zu nehmen, indem verfügbarer Speicherplatz neu zugeordnet wird.

5. Verfahren zum Betreiben eines Client (202) eines Netzwerkdateisystems, um die Übertragung eines Einheitsobjekts aus sequenziellen Daten, das größer als der verfügbare Speicherplatz eines Übertragungs-Cachespeichers (208) ist, über ein Netzwerk zu steuern, wobei das Verfahren **dadurch gekennzeichnet ist, dass** es die folgenden Schritte umfasst: durch eine Synchronisationskomponente (210) Ausgeben eines Dateisynchronisationsbefehls von dem Client (202) an einen Netzwerkdateisystem-Server (206) an einem Punkt, der zwischen einem Zustand "leer" eines Übertragungs-Cachespeichers und einem Zustand "voll" eines Übertragungs-Cachespeichers liegt; und nach dem Empfang einer positiven Antwort von dem Netzwerkdateisystem-Server (206) erneutes Freigeben von Speicherplatz in dem Übertragungs-Cachespeicher (208) durch eine Cachespeicher-Steuerungskomponente (212) zur Wiederverwendung nach der Ausgabe des Dateisynchronisationsbefehls.

6. Verfahren nach Anspruch 5, wobei das Einheitsobjekt mit den sequenziellen Daten ein binäres großes Datenobjekt (BLOB) ist.

7. Verfahren nach Anspruch 5 oder Anspruch 6, wobei der zwischen dem Zustand "leer" eines Übertragungs-Cachespeichers und dem Zustand "voll" eines Übertragungs-Cachespeichers liegende Punkt ein Mittelpunkt des verfügbaren Speicherplatzes eines Übertragungs-Cachespeichers ist.

8. Verfahren nach einem der Ansprüche 5 bis 7, wobei der zwischen dem Zustand "leer" eines Übertragungs-Cachespeichers und dem Zustand "voll" eines Übertragungs-Cachespeichers liegende Punkt eingestellt werden kann, um die maximal verfügbare Bandbreite in Anspruch zu nehmen, indem verfügbarer Speicherplatz neu zugeordnet wird.

9. Rechnerprogramm, das Rechnerprogramm-Code umfasst, um, wenn der Rechnerprogramm-Code in einen Rechnerspeicher geladen und darauf ausgeführt wird, das Rechnersystem zu veranlassen, die Schritte eines Verfahrens nach einem der Ansprüche 5 bis 8 durchzuführen.

## Revendications

1. Un dispositif pour exploiter un client de système de fichier mis en réseau (202) pour commander la transmission sur un réseau d'un objet de données séquentiel unitaire plus grand qu'une antémémoire de transmission (208) disponible, le dispositif étant **caractérisé par** le fait de comprendre : un composant de synchronisation (210), susceptible de fonctionner pour envoyer une instruction de synchronisation de fichier, du client (202) à un serveur de système de fichier mis en réseau (206), à un point intermédiaire entre un état d'antémémoire de transmission vide et un état d'antémémoire de transmission plein ; et un composant de commande d'antémémoire (212), susceptible de fonctionner à réception d'une réponse positive depuis ledit serveur de système de fichier mis en réseau (206), pour réclamer un espace d'antémémoire dans ladite antémémoire de transmission (208), pour réutilisation après envoi de ladite instruction de synchronisation de fichier.

2. Le dispositif tel que revendiqué à la revendication 1, dans lequel ledit objet de données séquentiel unitaire est un grand objet de données binaire (BLOB).

3. Le dispositif tel que revendiqué à la revendication 1 ou 2, dans lequel ledit point intermédiaire, entre un état d'antémémoire de transmission vide et un état d'antémémoire de transmission plein, est un point médian de ladite antémémoire de transmission disponible.

4. Le dispositif tel que revendiqué à l'une quelconque des revendications 1 à 3, dans lequel ledit point intermédiaire, entre un état d'antémémoire de transmission vide et un état d'antémémoire de transmission plein, est susceptible d'être accordé pour utiliser une largeur de bande disponible maximale, par réaffectation d'une mémoire disponible.

5. Un procédé d'exploitation d'un client de système de fichier mis en réseau (202), pour commander une transmission sur un réseau d'un objet données séquentiel unitaire, plus grand qu'une antémémoire de transmission disponible, le procédé étant **caractérisé par** le fait de comprendre les étapes consistant à: envoyer, par un composant de synchronisation (210), une instruction de synchronisation de fichier, du client (202) à un serveur de système de fichier mis en réseau (206), à un point intermédiaire, entre un état d'antémémoire de transmission vide et un état d'antémémoire de transmission plein ; et réclamer, par un composant de commande d'antémémoire (212), à réception d'une réponse positive émanant dudit serveur de système de fichier mis en réseau (206), un espace d'antémémoire dans ladite antémémoire de transmission (208), pour réutilisation après envoi de ladite instruction de synchronisation de fichier.

6. Le procédé tel que revendiqué à la revendication 5, dans lequel ledit objet de données séquentiel unitaire est un grand objet de données binaire (BLOB).

7. Le procédé tel que revendiqué à la revendication 5 ou à la revendication 6, dans lequel ledit point intermédiaire, entre un état d'antémémoire de transmission vide et un état d'antémémoire de transmission plein, est un point médian de ladite antémémoire de transmission disponible.

8. Le procédé tel que revendiqué à l'une quelconque des revendications 5 à 7, dans lequel ledit point intermédiaire, entre un état d'antémémoire de transmission vide et un état d'antémémoire de transmission plein, est susceptible d'être accordé pour utiliser une largeur de bande disponible maximale, par réaffectation d'une mémoire disponible.

9. Un programme pour ordinateur, comprenant un code de programme pour ordinateur pour, une fois chargé dans un système d'ordinateur et exécuté sur lui, faire exécuter par ledit système d'ordinateur les étapes d'un procédé tel que revendiqué à l'une quelconque des revendications 5 à 8.
